# EUROPEAN PATENT SPECIFICATION

(11) **EP 2 761 966 B1**
(45) Date of publication and mention of the grant of the patent: **18.11.2015**
(21) Application number: 12798369.0
(22) Date of filing: 25.09.2012
(51) Int. Cl.: H04W 76/00, H04W 4/22, H04W 4/04

(54) **METHOD AND PROCESSING SYSTEM FOR ATTEMPTING AN EMERGENCY CALL BY A WIRELESS DEVICE**
VERFAHREN UND VERARBEITUNGSSYSTEM ZUM VERSUCHEN EINES NOTRUFS DURCH EINE DRAHTLOSE VORRICHTUNG
PROCÉDÉ ET SYSTÈME DE TRAITEMENT PERMETTANT À UN DISPOSITIF SANS FIL DE TENTER DE PASSER UN APPEL D'URGENCE

(30) Priority: 27.09.2011 US 201113245959; 27.09.2011 GB 201116628
(43) Date of publication of application: 06.08.2014
(73) Proprietor: Broadcom Corporation, Irvine, CA 92617 (US)
(72) Inventor: MOISANEN, Matti, 90800 Oulu (FI); TIRKKONEN, Toni, 90460 Oulunsalo (FI)
(74) Representative: EIP
(86) International application number: PCT/IB2012/055104
(87) International publication number: WO 2013/046124

(56) References cited:
- US-A1- 2004 121 755
- US-A1- 2009 253 403
- ALCATEL-LUCENT ET AL: "3GPP TSG WG1 Meeting #73; C1-113752; PSAP Callback for eCalls", 3GPP DRAFT; C1-113752_(WAS C1-113677_ C1-113118)_24.008_PSAP_CALLBACK_ECALL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Malta; 20110822, 29 August 2011 (2011-08-29), XP050534220, [retrieved on 2011-08-29]
- QUALCOMM EUROPE: "3GPP TSG CT WG1 Meeting #54, C1-082348; Support of Expedited Location Updating for an eCall only UE", 3GPP DRAFT; C1-082348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Zagreb, Croatia; 20080616, 16 June 2008 (2008-06-16), XP050029616, [retrieved on 2008-06-16]
- QUALCOMM EUROPE: "3GPP TSG CT WG1 Meeting #; C1-081685; Discussion - Minimal MM Signalling for eCall Only Terminals", 3GPP DRAFT; C1-081685, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Cape Town; 20080515, 15 May 2008 (2008-05-15), XP050028920, [retrieved on 2008-05-15]

## Description

### Technical Field

The present invention relates to a method of operating a wireless device and a processing system for a wireless device.

### Background

The following abbreviations are used in the present specification:

| | |
|---|---|
| CM | Connection Management |
| GERAN | GSM-Enhanced Data Rates for Global Evolution |
| GSM | Global System for Mobile communications |
| MSD | Minimum Set of Data |
| MM | Mobility Management |
| PSAP | Public Safety Answering Point |
| RR | Radio Resource |
| RRC | Radio Resource Connection |
| UE | User Equipment |
| UMTS | Universal Mobile Telecommunications Systems |
| UTRAN | UMTS Terrestrial Radio Access Network |

There have been proposals for an in-vehicle emergency call service such that if for example a vehicle is involved in a (severe) collision, an emergency call over a wireless network can be made promptly so that, in turn, emergency services can be deployed quickly if necessary. The emergency call can be made or at least initiated manually by a human operator or automatically following detection of the collision by suitable sensors in the vehicle.

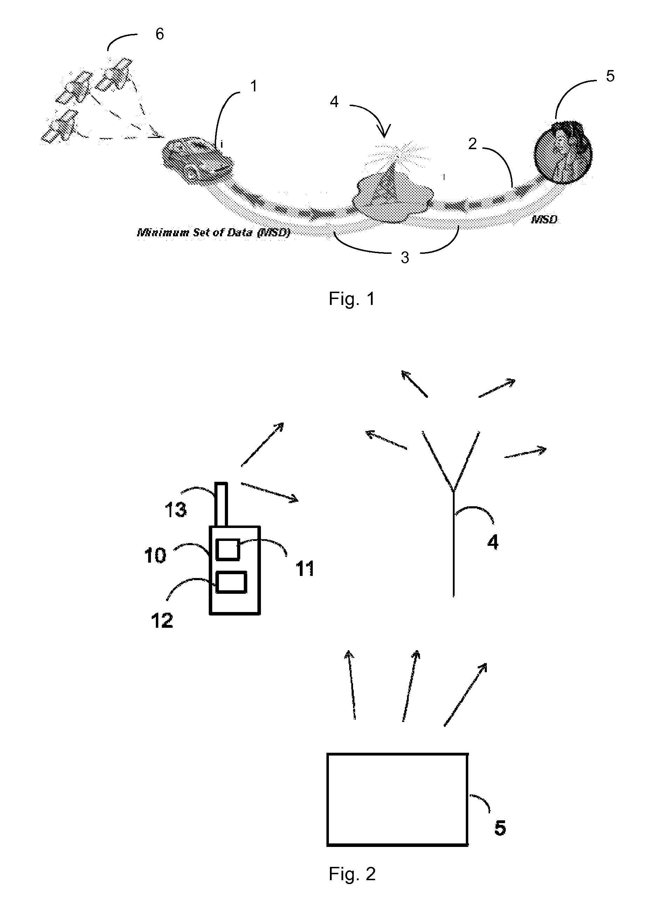

In Europe for example, there is currently a proposal from the European Commission for a service of this type, which is referred to as "eCall" and shown schematically in overview in Figure 1. This service is said to be expected to save hundreds of lives a year because of the rapid deployment of the emergency services and because the exact location of the vehicle 1 can be transmitted by a so-called eCall device which is installed in the vehicle 1. The eCall device of this proposal is a wireless device that can establish an emergency voice call 2 (referred to as "E112") and transfer a data message 3 (the prescribed minimum set of data or MSD) over the cellular network serviced by a radio mast 4 to a PSAP (Public Safety Answering Point) 5. The MSD 3 can include for example vehicle location information (optionally obtained using the Global Positioning System GPS 6), time stamp, number of passengers, Vehicle Identification Number (VIN), and other relevant accident information. It is expected that the eCall MSD information will be sent either immediately following the establishment of the voice call or at any point later during the voice call. The PSAP 5 is an emergency call centre responsible for answering calls made to an emergency telephone number for police, firefighting and ambulance services, and has telephone operators who are also usually responsible for dispatching these emergency services. It should be noted that such emergency devices, including eCall devices in particular, can be used in other applications and are not limited for use in or associated with vehicles.

In general, a wireless device (or "User Equipment" or UE, such as mobile or cell phones, including so-called "smart phones", and suitably equipped personal digital assistants, pagers, tablet and laptop computers, etc.) can attempt an emergency call without being registered with and without first attempting to register with a network. In the specific case of an eCall device, the eCall device (or more specifically the Mobility Management or MM layer in the eCall device) can be in the "eCALL INACTIVE" state in which it is not registered to any network (see for example the technical specification of the Third Generation Partnership Project 3GPP TS 24.008 V10.3.0). However, it may be desirable, and may even become mandatory, for the eCall device to support PSAP callback, i.e. the emergency telephone operator can call back after release of the emergency call. In such a case, network registration by the eCall device is required. The current proposal therefore is that the registration must be performed by the eCall device before the call. However, with current procedures and specifications, this can cause the emergency call to be delayed or even to fail to be made successfully at all.

The document 3GPP TSG CT WG1 Meeting #73 C1-113752 by Alcatel-Lucent and Deutsche Telekom discloses an arrangement whereby an eCall mobile station that is PSAP call-back capable needs to initiate a Location Updating procedure before going through MM (mobility management) and CM (connection management) procedures for establishing the emergency call.

US-A1-2004/0121755 discloses a method for enabling emergency sessions to be established in abnormal cases.

The document TSG-CT WG1 Meeting #54 C1-082348 by Qualcomm proposes adding a new "pending emergency call" flag to the Location Updating Type IE (information element) which can be set to indicate a pending emergency call when a location update occurs.

### Summary

According to a first aspect of the present invention, there is provided a method of operating a wireless device, the method comprising: the wireless device transmitting at least one request message for receipt by a wireless network to at least one of request attachment of the wireless device to the wireless network and request location updating for the wireless device from the wireless network; and, the wireless device subsequently attempting an emergency call to a wireless network regardless of whether or not the wireless device receives a response to the request.

Embodiments of the present invention provide that a wireless device or UE, including in particular an eCall device, attempts registration with a wireless network prior to making an emergency call, but attempts to make the emergency call regardless, improving the likelihood of success of the emergency call and of the emergency call being made promptly.

In the above, in general, the request message and the emergency call may be made to the same network or, in some cases, to different networks (whether using different wireless technologies or standards, or just different cells of a cellular network for example).

In an embodiment, the wireless device attempts the emergency call after the wireless device has transmitted a single said request message. This helps to minimise delays in the emergency call being made. In an embodiment, the wireless device attempts the emergency call a predetermined period of time after transmitting the request message. The time period can be set to allow some time for receipt of a response, but is nevertheless preferably kept short in order again to minimise delays in the emergency call being made.

In an embodiment, the wireless device attempts the emergency call after the wireless device has transmitted a plurality of request messages. The device may for example be permitted to make a number of attempts, though this is preferably kept to a minimum in order to prevent delays in the emergency call being made. In an embodiment, the wireless device attempts the emergency call a predetermined period of time after transmitting the last of the request messages. In another embodiment, the wireless device transmits the plurality of request messages within a predetermined period of time, and the wireless device attempts the emergency call after expiry of said predetermined period of time regardless of whether or not the wireless device receives a response to one of the requests.

In an embodiment, the wireless device attempts the emergency call immediately upon receipt of a negative response from a said wireless network which rejects the request for attachment or the request for location updating. In the case of receiving a rejection from the network, it can be decided not to delay further the attempt to make the emergency call, and this allows the emergency call to be made as soon as possible in such a case.

In an embodiment, the wireless device transmits the at least one request message in response to detection of an emergency. The detection of an emergency and also the triggering of the transmission of the request message may be carried out automatically, without requiring human input.

In an embodiment, the wireless device transmits the at least one request message that requests location updating for the wireless device from a Universal Mobile Telecommunications System Terrestrial Radio Access Network (UTRAN) wireless network, in which an establishment cause for the location updating is set to a value "Emergency call". In another embodiment, the wireless device transmits the at least one request message that requests location updating for the wireless device from a Global System for Mobile communications-Enhanced Data Rates for Global Evolution (GERAN) wireless network, in which an establishment cause for the location updating is set to a value "Emergency call". In either case, this gives the request message the highest priority in the wireless network.

The wireless device may be an in-vehicle device providing an in-vehicle emergency call service. The wireless device may however provide an emergency call service in other applications and fields.

According to a second aspect of the present invention, there is provided a processing system for a wireless device, the processing system being constructed and arranged to cause: a wireless device having the processing system to transmit at least one request message for receipt by a wireless network to at least one of request attachment of the wireless device to the wireless network and request location updating for the wireless device from the wireless network, and to subsequently attempt an emergency call to a wireless network regardless of whether or not the wireless device receives a response to the request.

The processing system may comprise at least one processor and at least one memory including computer program code, the at least one memory and the computer program code being configured, with the at least one processor, to cause the wireless device at least to perform as described above.

There may also be provided a wireless device comprising a processing system as described above.

There may also be provided a computer program comprising code such that when the computer program is executed on a computing device, the computing device is arranged to carry out a method as described above. The computer program may be stored on a non-transitory computer-readable storage medium and comprise a set of computer-readable instructions stored thereon.

Further features and advantages of the invention will become apparent from the following description of preferred embodiments of the invention, given by way of example only, which is made with reference to the accompanying drawings.

### Brief Description of the Drawings

Figure 1 shows schematically an overview of the eCall procedure;
Figure 2 shows schematically an example of a wireless device communicating via a wireless network with a PSAP; and
Figures 3 and 4 show schematic timing diagrams of examples of methods according to an embodiment of the present invention.

### Detailed Description

Referring to Figure 2, there is shown schematically an example of a wireless device 10 communicating with a wireless network. The wireless device 10 contains the necessary radio module 11, processor(s) and memory/memories 12, antenna 13, etc. to enable wireless communication with the network. The wireless device 10 in use is in communication with a wireless cellular network having coverage provided by a radio mast 4.

In a specific example of the present invention, the wireless device 10 is an in-vehicle device providing an in-vehicle emergency call service. A particular example is the so-called eCall service, in which case the wireless device 10 is termed an eCall device 10, which may be installed in a vehicle 1, such as a road vehicle as shown schematically in Figure 1 and discussed generally above. Figure 2 also shows schematically the PSAP (Public Safety Answering Point) 5 with which the eCall device 10 attempts to make contact in the event of an emergency (such as the vehicle 1 being involved in a collision) over the wireless network as discussed above. As noted above, such emergency devices, including eCall devices in particular, can be used in other applications and are not limited for use in or associated with vehicles.

In practice, the eCall device 10 (or more specifically the Mobility Management or MM layer provided by the processor 12 of the eCall device 10) will typically be in the "eCALL INACTIVE" service state, which is principally intended to minimise or avoid altogether the exchange of signals with the wireless network. In this service state, the eCall device 10 does not perform periodic updating; does not perform IMSI (International Mobile Subscriber Identity) detach; rejects any requests from Connection Management entities for Mobility Management connections except for emergency calls and calls to a non-emergency Mobile Station International Subscriber Directory Number for test and terminal reconfiguration services; does not perform normal location updating; and does not respond to paging (see for example the technical specification of the Third Generation Partnership Project 3GPP TS 24.008 V10.3.0). Thus, while in the eCALL INACTIVE state, the eCall device 10 may maintain awareness of a potential serving cell in a potential serving network but initiates no MM signalling with the network and ignores any paging requests. Significantly for present purposes, the eCall device 10 when in the eCALL INACTIVE service state is not registered to any network.

In the event of an emergency, such as for example the vehicle 1 being involved in a collision, an attempt to make an emergency call over the cellular network can be made using the eCall device 10. This can be initiated manually by a human operator or automatically, for example following detection of the collision by suitable sensors in the vehicle 1. As noted above, in many instances, it may be desirable for the eCall device 10 to support PSAP callback, i.e. the emergency telephone operator at the PSAP 5 can call the eCall device 10 back after release of the emergency call, to enable voice communication between the emergency telephone operator and the person or persons associated with the vehicle 1. Supporting PSAP callback may become a mandatory requirement. To enable PSAP callback, a process of network registration by the eCall device 10 will normally be required given that, at the time of the collision or other emergency, the eCall device 10 will typically have been in the "eCALL INACTIVE" service state in which it is not registered to any network. The current proposal is that this registration must be performed by the eCall device 10 before it attempts to make the emergency call. Such registration may be or require for example a location updating procedure, as used in for example GSM and UMTS systems, or an attach procedure, which may involve a location updating procedure.

In a conventional attach procedure, and more specifically a location updating procedure, as described in for example 3GPP TS 24.008 V10.3.0 mentioned above, a wireless device is seeking to update the registration of the actual Location Area of the wireless device in the network. The location area in a particular case is a set of cells in the network. In general, a wireless device performs location area updating procedure when it enters a cell that belongs to another location area from the one where the previous location updating was made, or when a wireless device is first switched on for example. The wireless device sends a LOCATION UPDATING REQUEST to the network or, more specifically, a network control apparatus. The "network control apparatus" is the overall apparatus that provides for general management and control of the network and connected devices. Such apparatus may in practice be constituted by several discrete pieces of equipment. As a particular example in the context of UMTS, the network control apparatus may be constituted by for example a so-called Radio Network Controller operating in conjunction with one or more Node Bs (which, in many respects, can be regarded as "base stations").

For any of a number of reasons, the location updating procedure may fail, or at least may fail initially. For example, the procedure can be rejected by the network, or there may be delays for example because of a non-responding network and several reattempts of the location updating procedure after, or there may be radio access problems for example during high load situations. In a conventional location updating procedure, the wireless device initiates the location updating procedure by sending a LOCATION UPDATING REQUEST message to the network, starts a timer (the timer T3210 of 3GPP TS 24.008 V10.3.0, which is 20 seconds in one example) and enters the state LOCATION UPDATING INITIATED. If the location updating procedure is not successful at the end of this time period (either because no response has been received from the network or because radio access problems occur), conventionally a further LOCATION UPDATING REQUEST is transmitted by the wireless device, and the timer is reset. To limit the number of location updating attempts made, an attempt counter is used, which counts the number of consecutive unsuccessful location update attempts and causes the location updating procedure to cease after a certain number of (failed) attempts. Moreover, depending on the reasons for the failure of the location updating procedure attempt, the wireless device may be placed in an MM IDLE service state for a period of time (the timer T3211 of 3GPP TS 24.008 V10.3.0, which is 15 seconds in one example) before making another location updating attempt. As yet another example, in the conventional procedure, if the wireless device receives a LOCATION UPDATING REJECT message from the network, in some cases yet another timer is started (as an example of 8 seconds duration) to delay the making of another location updating attempt in order to allow the wireless device to attempt to select a different network cell.

Thus, if these conventional procedures are followed for the attach or location updating procedure in the case of an emergency device, such as an in-vehicle or other eCall device 10 discussed above, the result may be that the attach or location updating procedure lasts a long time, which delays the making of the emergency call. It is well known that delays of even minutes in despatch of emergency services can have a serious impact on the chances of a successful outcome for the emergency services attending an incident, particularly in the case of firefighting and ambulance services. Moreover, in the procedure as proposed, the emergency call will not be made until the attach or location updating procedure has been successfully completed, which may prevent the emergency call being made altogether.

Accordingly, in accordance with one exemplary embodiment of the present invention, the wireless device 10 attempts to make an emergency call to a wireless network regardless of whether or not the wireless device receives a response to the request message that is sent to initiate the attach or location updating procedure, and in a preferred embodiment regardless of the content of any response if received. If a positive response from the network is received at the wireless device 10, then the wireless device 10 can proceed to make the emergency call as expected and as normal. However, if the wireless device 10 receives a negative response (such as LOCATION UPDATING REJECT message) from the network, or if the wireless device 10 receives no response, the wireless device 10 proceeds to attempt the emergency call regardless. In the preferred embodiment, the wireless device 10 does not for example attempt the attach or location updating procedure again, and specifically, in an embodiment, does not send any further LOCATION UPDATING REQUEST message to the network.

A timer in the wireless device 10 may be started when it first attempts the attach or location updating procedure (i.e. in an example, when the LOCATION UPDATING REQUEST message is sent). Such a timer is preferably of a relatively short duration such as between 10 to 30 seconds say (and may for example be the timer T3210 of 3GPP TS 24.008 V10.3.0, which is 20 seconds). If no response is received from the network during that time period, the wireless device 10 attempts the emergency call immediately, or at least very soon or as soon as possible, after the end of that time period. Moreover, the wireless device 10 may attempt the emergency call immediately, or at least practically immediately or at least very soon or as soon as possible, after receiving a negative response (such as LOCATION UPDATING REJECT message) from the network.

In an exemplary embodiment of the present invention, the wireless device 10 makes just one attempt of the attach or location updating procedure, i.e. the wireless device 10 sends a single request message requesting attachment of the wireless device to the wireless network or requesting location updating for the wireless device from the wireless network, prior to attempting the emergency call regardless of the outcome of the sending of that request. Nevertheless, though not preferred, it may be that the wireless device 10 makes more than one attempt of the attach or location updating procedure, with the subsequent attempt or attempt being made some time after the first or previous attempt, or some time after a negative response is received from the network. Such time is in each case preferably short, such as 20 seconds, and moreover the number of attempts is also preferably kept low so that for example a maximum of say two or three attempts is made in total. Nevertheless, as mentioned above, the wireless device 10 proceeds to attempt the emergency call regardless of the ultimate outcome of these attempts of the attach or location updating procedure. The wireless device 10 may for example attempt the emergency call a predetermined period of time following transmission of the last of the predetermined number of request messages for the attach or location updating procedure. As another alternative, the attach or location updating can be attempted for a certain period of time, e.g. for 30 seconds, and as many location updating attempts as possible can be made during that time, with the emergency call being made at the end of that period of time regardless of whether any response to the attach or location updating request is received.

Accordingly, in these embodiments a wireless device, such as an eCall device, attempts registration with a wireless network prior to making an emergency call, but attempts to make the emergency call regardless, improving the likelihood of success of the emergency call and of the emergency call being made promptly. It may be noted that this may prevent PSAP callback, i.e. the emergency telephone operator at the PSAP 5 being able (immediately) to call the eCall device 10 back after release of the emergency call, but it is deemed more important in this scenario that the eCall device 10 can make the emergency call regardless and can do so promptly and without delay. In the preferred embodiment, the wireless device 10 makes just one attempt of the attach or location updating procedure prior to attempting the emergency call.

In the case of the wireless network being a UTRAN access network, the RRC (Radio Resource Connection) establishment cause for the UTRAN RRC connection establishment (which is described in 3GPP TS 24.008 chapter L.1 and which indicates the reason for requesting the establishment of a connection) for the location updating can be set to the value "Emergency call". Correspondingly, in the case of the wireless network being a GERAN access network, the GERAN RR connection establishment cause (described in 3GPP TS 44.018 chapter 9.1.8) can be set to "Emergency call". In either case, this gives this connection establishment the highest priority in the wireless network.

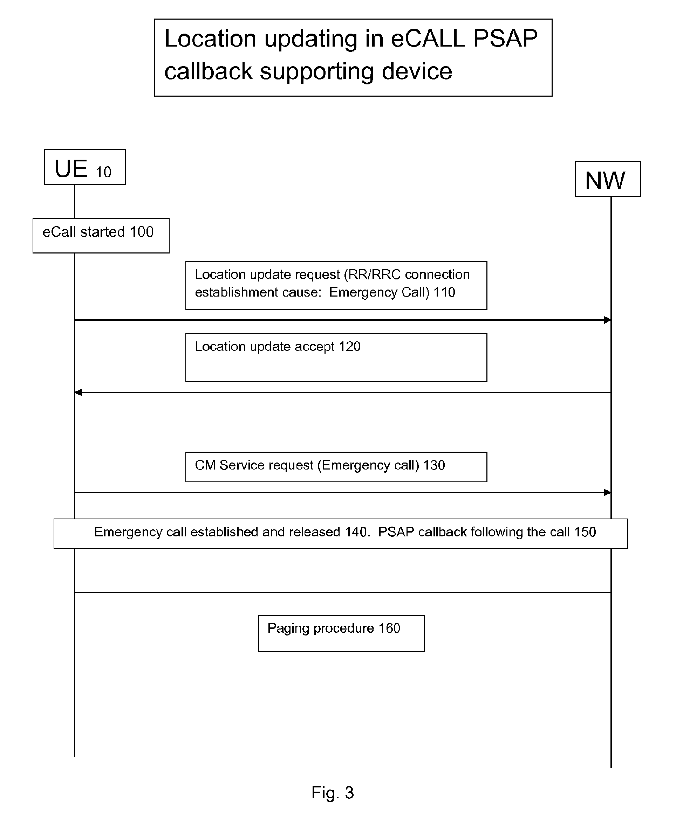

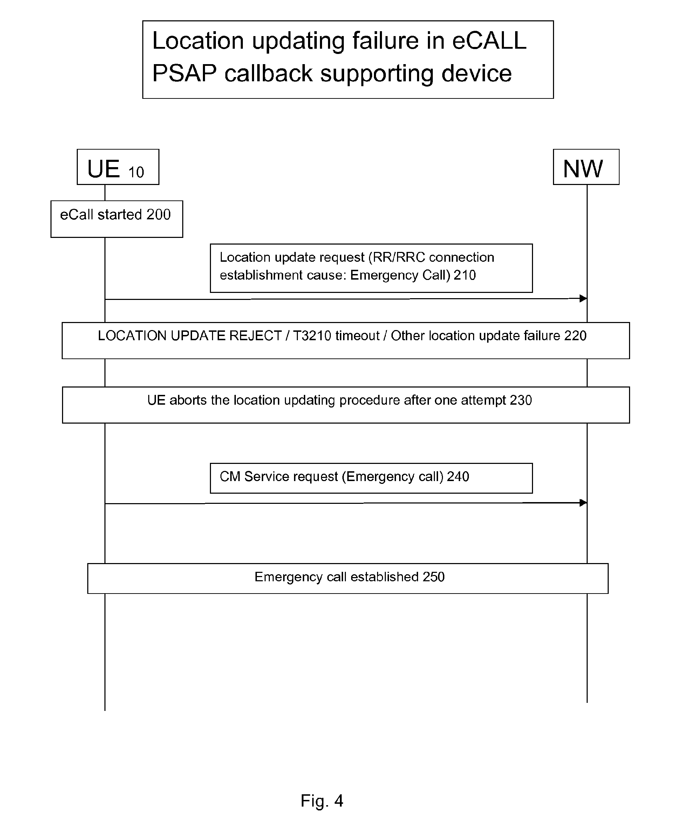

Figures 3 and 4 show schematic timing diagrams of examples of methods according to an embodiment of the present invention.

In Figure 3, an eCall is initiated 100 by the eCall device or UE 10, either manually by a human operator or automatically, for example following detection of a collision of a vehicle in which the device 10 is fitted. The device 10 transmits 110 a location update request, with the RRC/RR connection establishment cause being set to the value Emergency Call, to the network. In this case, the location update request 110 is successful so the network sends a LOCATION UPDATE ACCEPT message 120 to the device 10. The device 10 can then attempt the emergency call, in this case by sending a CM (Connection Management) service request 130 to the network. The Emergency call can then be established and subsequently released 140. In this case, because the location update procedure was successful, the PSAP callback 150 can take place immediately following the release of the emergency call, with a paging procedure 160 taking place as conventional.

In the case shown in Figure 4, again an eCall is initiated 200 by the eCall device or UE 10, either manually by a human operator or automatically. The device 10 transmits 210 a location update request, with the RRC/RR connection establishment cause being set to the value Emergency Call, to the network. In this case, however, the location update request is not successful 220. For example, the network may send a LOCATION UPDATING REJECT message, or the "location update response wait" timer (which may be the timer T3210 discussed above) may expire without any response being received, or for some other reason. Accordingly, the device 10 aborts the location updating procedure after one attempt 230 in this example and attempts the emergency call regardless, in this case again by sending a CM (Connection Management) service request 240 to the network. The Emergency call can then be established and subsequently released 250. In this case, because the location update procedure failed, the PSAP callback cannot take place (at least immediately).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The above embodiments are to be understood as illustrative examples of the invention. Further embodiments of the invention are envisaged. For example, whilst specific examples have been given above of use in a UTRAN access network and a GERAN access network, examples of the present invention have application in other existing or future wireless technologies. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of operating a wireless device (10), the method comprising:
the wireless device (10) transmitting at least one request message (210) for receipt by a wireless network to at least one of request attachment of the wireless device (10) to the wireless network and request location updating for the wireless device (10) from the wireless network; and,
the wireless device (10) subsequently attempting an emergency call (240) to a wireless network regardless of whether or not the wireless device (10) receives a response to the request (210).

2. A method according to claim 1, wherein the wireless device (10) attempts the emergency call (240) immediately upon receipt of a negative response from a said wireless network which rejects the request for attachment or the request for location updating (210).

3. A method according to claim 1 or claim 2, the wireless device (10) transmitting the at least one request message (210) in response to detection of an emergency.

4. A method according to any of claims 1 to 3, wherein the wireless device (10) transmits the at least one request message (210) that requests location updating for the wireless device from a Universal Mobile Telecommunications System Terrestrial Radio Access Network, UTRAN, wireless network, in which an establishment cause for the location updating is set to a value "Emergency call".

5. A method according to any of claims 1 to 3, wherein the wireless device (10) transmits the at least one request message (210) that requests location updating for the wireless device from a Global System for Mobile communications-Enhanced Data Rates for Global Evolution, GERAN, wireless network, in which an establishment cause for the location updating is set to a value "Emergency call".

6. A method according to any of claims 1 to 5, wherein the wireless device (10) is installed in a vehicle and provides an in-vehicle emergency call service.

7. A method according to any of claims 1 to 6, wherein the wireless device (10) is a wireless eCall device (10), wherein the wireless eCall device (10) transmits the at least one request message (210) while the wireless eCall device (10) is in an eCall INACTIVE state in which the wireless eCall device (10) is not registered to a wireless network, and wherein the wireless eCall device (10) subsequently attempts the emergency call (240) to a wireless network regardless of whether or not the wireless eCall device (10) receives a response to the request (210) and regardless of whether or not the wireless eCall device (10) is registered to the wireless network.

8. A processing system for a wireless device (10), the processing system being constructed and arranged to cause:
a wireless device (10) having the processing system to transmit at least one request message (210) for receipt by a wireless network to at least one of request attachment of the wireless device (10) to the wireless network and request location updating for the wireless device (10) from the wireless network, and to subsequently attempt an emergency call (240) to a wireless network regardless of whether or not the wireless device (10) receives a response to the request (210).

9. A processing system according to claim 8, wherein the processing system is constructed and arranged to cause a said wireless device (10) to attempt the emergency call (240) after the wireless device (10) has transmitted a single said request message (210).

10. A processing system according to claim 9, wherein the processing system is constructed and arranged to cause a said wireless device (10) to attempt the emergency call (240) a predetermined period of time after transmitting the request message (210).

11. A processing system according to claim 8, wherein the processing system is constructed and arranged to cause a said wireless device (10) to attempt the emergency call (240) after the wireless device has transmitted a plurality of request messages (210).

12. A processing system according to claim 11, wherein the processing system is constructed and arranged to cause a said wireless device (10) to attempt the emergency call (240) a predetermined period of time after transmitting the last of the request messages (210).

13. A processing system according to claim 11, wherein the processing system is constructed and arranged to cause a said wireless device (10) to transmit the plurality of request messages (210) within a predetermined period of time, and to attempt the emergency call after expiry of said predetermined period of time regardless of whether or not the wireless device (10) receives a response to one of the requests (210).

14. A processing system according to any of claims 8 to 13, wherein the processing system is constructed and arranged to cause a said wireless device (10) to attempt the emergency call (240) immediately upon receipt of a negative response from a said wireless network which rejects the request for attachment or the request for location updating (210).

15. A processing system according to any of claims 8 to 14, wherein the processing system is constructed and arranged to cause a said wireless device (10) to transmit the at least one request message (210) in response to detection of an emergency.

16. A processing system according to any of claims 8 to 15, wherein the processing system is constructed and arranged to cause a said wireless device (10) to transmit the at least one request message (210) that requests location updating for the wireless device (10) from a Universal Mobile Telecommunications System Terrestrial Radio Access Network, UTRAN, wireless network, in which an establishment cause for the location updating is set to a value "Emergency call".

17. A processing system according to any of claims 8 to 15, wherein the processing system is constructed and arranged to cause a said wireless device (10) to transmit the at least one request message (210) that requests location updating for the wireless device (10) from a Global System for Mobile communications-Enhanced Data Rates for Global Evolution, GERAN, wireless network, in which an establishment cause for the location updating is set to a value "Emergency call".

18. A processing system according to any of claims 8 to 17, wherein the wireless device (10) is a wireless eCall device (10), and wherein the processing system is constructed and arranged to cause the wireless eCall device (10) to transmit the at least one request message (210) while the wireless eCall device (10) is in an eCall INACTIVE state in which the wireless eCall device (10) is not registered to a wireless network, and to cause the wireless eCall device (10) to subsequently attempt the emergency call (240) to a wireless network regardless of whether or not the wireless eCall device (10) receives a response to the request (210) and regardless of whether or not the wireless eCall device (10) is registered to the wireless network.

## Patentansprüche

1. Verfahren eines Betreibens eines Drahtlosgeräts (10), wobei das Verfahren umfasst:
ein Übertragen, durch das Drahtlosgerät (10), von zumindest einer Anfragenachricht (210) zum Empfang durch ein Drahtlosnetzwerk, für zumindest eines aus einer Anfrage für einen Anschluss des Drahtlosgeräts (10) an das Drahtlosnetzwerk und einer Anfrage für eine Ortsaktualisierung für das Drahtlosgerät (10) von dem Drahtlosnetzwerk, und
ein nachfolgendes Versuchen, durch das Drahtlosgerät (10), eines Notrufs (240) zu einem Drahtlosnetzwerk unabhängig davon, ob das Drahtlosgerät (10) eine Antwort auf die Anfrage (210) empfängt oder nicht.

2. Verfahren nach Anspruch 1, wobei das Drahtlosgerät (10) den Notruf (240) unmittelbar auf einen Empfang einer Negativantwort von dem Drahtlosnetzwerk versucht, das die Anfrage für einen Anschluss oder die Anfrage für eine Ortsaktualisierung (210) ablehnt.

3. Verfahren nach Anspruch 1 oder 2, wobei das Drahtlosgerät (10) die zumindest eine Anfragenachricht (210) als Reaktion auf eine Erfassung eines Notfalls überträgt.

4. Verfahren nach einem der Ansprüche 1 bis 3, wobei das Drahtlosgerät (10) die zumindest eine Anfragenachricht (210) überträgt, die eine Ortsaktualisierung für das Drahtlosgerät von einem Universal Mobile Telecommunications System Terrestrial Radio Access Network - Drahtlosnetzwerk, UTRAN, anfragt, bei dem ein Einrichtungsgrund für die Ortsaktualisierung auf einen Wert "Notruf" eingestellt ist.

5. Verfahren nach einem der Ansprüche 1 bis 3, wobei das Drahtlosgerät (10) die zumindest eine Anfragenachricht (210) überträgt, die eine Ortsaktualisierung für das Drahtlosgerät von einem Global System for Mobile Communications - Enhanced Data Rates for Global Evolution - Drahtlosnetzwerk, GERAN, anfragt, bei dem ein Einrichtungsgrund für die Ortsaktualisierung auf einen Wert "Notruf" eingestellt ist.

6. Verfahren nach einem der Ansprüche 1 bis 5, wobei das Drahtlosgerät (10) bei einem Fahrzeug installiert ist und einen fahrzeugseitigen Notrufdienst bereitstellt.

7. Verfahren nach einem der Ansprüche 1 bis 6, wobei das Drahtlosgerät (10) ein Drahtlos-eCall-Gerät (10) ist, wobei das Drahtlos-eCall-Gerät (10) die zumindest eine Anfragenachricht (210) überträgt, während sich das Drahtlos-eCall-Gerät (10) in einem eCall-INAKTIV-Zustand befindet, in dem das Drahtlos-eCall-Gerät (10) nicht bei einem Drahtlosnetzwerk angemeldet ist, und wobei das Drahtlos-eCall-Gerät nachfolgend den Notruf (240) zu einem Drahtlosnetzwerk unabhängig davon versucht, ob das Drahtlos-eCall-Gerät (10) eine Antwort auf die Anfrage (210) empfängt oder nicht und unabhängig davon, ob das Drahtlos-eCall-Gerät (10) bei dem Drahtlosnetzwerk angemeldet ist oder nicht.

8. Verarbeitungssystem für ein Drahtlosgerät (10), wobei das Verarbeitungssystem derart konstruiert und eingerichtet ist, um ein Drahtlosgerät (10) mit dem Verarbeitungssystem dazu zu bringen
zumindest eine Anfragenachricht (210) zum Empfang durch ein Drahtlosnetzwerk zu übertragen, für zumindest eines aus einer Anfrage für einen Anschluss des Drahtlosgeräts (10) an das Drahtlosnetzwerk und einer Anfrage für eine Ortsaktualisierung für das Drahtlosgerät (10) von dem Drahtlosnetzwerk, und nachfolgend einen Notruf (240) zu einem Drahtlosnetzwerk unabhängig davon zu versuchen, ob das Drahtlosgerät (10) eine Antwort auf die Anfrage (210) empfängt oder nicht.

9. Verarbeitungssystem nach Anspruch 8, wobei das Verarbeitungssystem derart konstruiert und eingerichtet ist, um das Drahtlosgerät (10) dazu zu bringen, den Notruf (240) zu versuchen, nachdem das Drahtlosgerät (10) eine einzelne der Anfragenachricht (210) übertragen hat.

10. Verarbeitungssystem nach Anspruch 9, wobei das Verarbeitungssystem derart konstruiert und eingerichtet ist, um das Drahtlosgerät (10) dazu zu bringen, den Notruf (240) einen vorbestimmten Zeitabschnitt nach einem Übertragen der Anfragenachricht (210) zu versuchen.

11. Verarbeitungssystem nach Anspruch 8, wobei das Verarbeitungssystem derart konstruiert und eingerichtet ist, um das Drahtlosgerät (10) dazu zu bringen, den Notruf (240) zu versuchen, nachdem das Drahtlosgerät eine Vielzahl von Anfragenachrichten (210) übertragen hat.

12. Verarbeitungssystem nach Anspruch 11, wobei das Verarbeitungssystem derart konstruiert und eingerichtet ist, um das Drahtlosgerät (10) dazu zu bringen, den Notruf (240) einen vorbestimmten Zeitabschnitt nach einem Übertragen der letzten der Anfragenachrichten (210) zu versuchen.

13. Verarbeitungssystem nach Anspruch 11, wobei das Verarbeitungssystem derart konstruiert und eingerichtet ist, um das Drahtlosgerät (10) dazu zu bringen, die Vielzahl von Anfragenachrichten (210) innerhalb eines vorbestimmten Zeitabschnitts zu übertragen, und den Notruf nach Ablauf des vorbestimmten Zeitabschnitts unabhängig davon zu versuchen, ob das Drahtlosgerät (10) eine Antwort auf eine der Anfragen empfängt oder nicht.

14. Verarbeitungssystem nach einem der Ansprüche 8 bis 13, wobei das Verarbeitungssystem derart konstruiert und eingerichtet ist, um das Drahtlosgerät (10) dazu zu bringen, den Notruf (240) unmittelbar auf einen Empfang einer Negativantwort von dem Drahtlosnetzwerk zu versuchen, das die Anfrage für einen Anschluss oder die Anfrage für eine Ortsaktualisierung (210) ablehnt.

15. Verarbeitungssystem nach einem der Ansprüche 8 bis 14, wobei das Verarbeitungssystem derart konstruiert und eingerichtet ist, um das Drahtlosgerät (10) dazu zu bringen, die zumindest eine Anfragenachricht (210) als Reaktion auf eine Erfassung eines Notfalls zu übertragen.

16. Verarbeitungssystem nach einem der Ansprüche 8 bis 15, wobei das Verarbeitungssystem derart konstruiert und eingerichtet ist, um das Drahtlosgerät (10) dazu zu bringen, die zumindest eine Anfragenachricht (210) zu übertragen, die eine Ortsaktualisierung für das Drahtlosgerät (10) von einem Universal Mobile Telecommunications System Terrestrial Radio Access Network -Drahtlosnetzwerk, UTRAN, anfragt, bei dem ein Einrichtungsgrund für die Ortsaktualisierung auf einen Wert "Notruf" eingestellt ist.

17. Verarbeitungssystem nach einem der Ansprüche 8 bis 15, wobei das Verarbeitungssystem derart konstruiert und eingerichtet ist, um das Drahtlosgerät (10) dazu zu bringen, die zumindest eine Anfragenachricht (210) zu übertragen, die eine Ortsaktualisierung für das Drahtlosgerät (10) von einem Global System for Mobile Communications - Enhanced Data Rates for Global Evolution -Drahtlosnetzwerk, GERAN, anfragt, bei dem ein Einrichtungsgrund für die Ortsaktualisierung auf einen Wert "Notruf" eingestellt ist.

18. Verarbeitungssystem nach einem der Ansprüche 8 bis 17, wobei das Drahtlosgerät (10) ein Drahtlos-eCall-Gerät (10) ist, und wobei das Verarbeitungssystem derart konstruiert und eingerichtet ist, um das Drahtlos-eCall-Gerät (10) dazu zu bringen, die zumindest eine Anfragenachricht (210) zu übertragen, während sich das Drahtlos-eCall-Gerät (10) in einem eCall-INAKTIV-Zustand befindet, in dem das Drahtlos-eCall-Gerät (10) nicht bei einem Drahtlosnetzwerk angemeldet ist, und das Drahtlos-eCall-Gerät (10) dazu zu bringen, nachfolgend den Notruf (240) zu einem Drahtlosnetzwerk unabhängig davon zu versuchen, ob das Drahtlos-eCall-Gerät (10) eine Antwort auf die Anfrage (210) empfängt oder nicht und unabhängig davon, ob das Drahtlos-eCall-Gerät (10) bei dem Drahtlosnetzwerk angemeldet ist oder nicht.

## Revendications

1. Procédé destiné à faire fonctionner un dispositif sans fil (10), le procédé comprenant :
la transmission par le dispositif sans fil (10) d'au moins un message de demande (210) pour la réception par un réseau sans fil d'au moins une parmi une demande d'attachement du dispositif sans fil (10) au réseau sans fil et une demande de mise à jour de localisation du dispositif sans fil (10) par le réseau sans fil, et
la tentative par le dispositif sans fil (10) d'un appel d'urgence (240) vers un réseau sans fil indépendamment de ce qu'il reçoit une réponse à la demande (210) ou non.

2. Procédé suivant la revendication 1, dans lequel le dispositif sans fil (10) tente l'appel d'urgence (240) immédiatement après avoir reçu une réponse négative d'un dit réseau sans fil qui rejette la demande d'attachement ou la demande de mise à jour de localisation (210).

3. Procédé suivant la revendication 1 ou 2, le dispositif sans fil (10) transmettant l'au moins un message de demande (210) en réponse à la détection d'une urgence.

4. Procédé suivant une quelconque des revendications 1 à 3, dans lequel le dispositif sans fil (10) transmet l'au moins un message de demande (210) qui demande la mise à jour de localisation du dispositif sans fil par un réseau d'accès radio terrestre de système de télécommunications mobiles universel, UTRAN, réseau sans fil, dans lequel une cause d'établissement pour la mise à jour de localisation est réglée à une valeur d'« appel d'urgence ».

5. Procédé suivant une quelconque des revendications 1 à 3, dans lequel le dispositif sans fil (10) transmet l'au moins un message de demande (210) qui demande la mise à jour de localisation pour le dispositif sans fil par un système mondial de communications mobiles à débits binaires améliorés pour les GSM de demain, GERAN, réseau sans fil, dans lequel une cause d'établissement pour la mise à jour de localisation est réglée à une valeur d'« appel d'urgence ».

6. Procédé suivant une quelconque des revendications 1 à 5, dans lequel le dispositif sans fil (10) est installé dans un véhicule et fournit un service d'appel d'urgence embarqué dans les véhicules.

7. Procédé suivant une quelconque des revendications 1 à 6, dans lequel le dispositif sans fil (10) est un dispositif ecall sans fil (10), le dispositif ecall sans fil (10) transmettant l'au moins un message de demande (210) pendant qu'il est en état d'ecall INACTIF, état, dans lequel il n'est pas enregistré dans un réseau sans fil, et le dispositif ecall sans fil (10) tentant, ensuite, l'appel d'urgence (240) vers un réseau sans fil, indépendamment de ce qu'il reçoit une réponse à la demande (210) ou non et indépendamment de ce qu'il est enregistré dans un réseau sans fil ou non.

8. Système de traitement pour un dispositif sans fil (10), le système de traitement étant construit et disposé pour obtenir:
d'un dispositif sans fil (10) qu'il fasse transmettre par le système de traitement au moins un message de demande (210) pour la réception par un réseau sans fil d'au moins une parmi une demande d'attachement du dispositif sans fil (10) au réseau sans fil et une demande de mise à jour de localisation du dispositif sans fil (10) par le réseau sans fil, et qu'il tente, ensuite, un appel d'urgence (240) vers un réseau sans fil indépendamment de ce que le dispositif sans fil (10) reçoit une réponse à la demande (210) ou pas.

9. Système de traitement suivant la revendication 8, le système de traitement étant construit et disposé de façon à obtenir d'un dit dispositif sans fil (10) qu'il tente l'appel d'urgence (240) après avoir transmis un seul dit message de demande (210).

10. Système de traitement suivant la revendication 9, le système de traitement étant construit et disposé de façon à obtenir d'un dispositif sans fil (10) qu'il tente l'appel d'urgence (240) une fois qu'une période de temps prédéterminée s'est écoulée après avoir transmis le message de demande (210).

11. Système de traitement suivant la revendication 8, le système de traitement étant construit et disposé de façon à obtenir d'un dit dispositif sans fil (10) qu'il tente l'appel d'urgence (240) après avoir transmis une pluralité de messages de demande (210).

12. Système de traitement suivant la revendication 11, le système de traitement étant construit et disposé de façon à obtenir d'un dit dispositif sans fil (10) qu'il tente l'appel d'urgence (240) une fois qu'une période de temps prédéterminée s'est écoulée après avoir transmis le dernier des messages de demande (210).

13. Système de traitement suivant la revendication 11, le système de traitement étant construit et disposé de façon à obtenir d'un dit dispositif sans fil (10) qu'il transmette la pluralité de messages de demande (210) pendant une période de temps prédéterminée et qu'il tente l'appel d'urgence à l'expiration de ladite période de temps prédéterminée, indépendamment de ce que le dispositif sans fil (10) reçoit une réponse à une des demandes (210) ou non.

14. Système de traitement suivant une quelconque des revendications 8 à 13, le système de traitement étant construit et disposé de façon à obtenir d'un dit dispositif sans fil (10) qu'il tente l'appel d'urgence (240) immédiatement après réception d'une réponse négative d'un dit réseau sans fil qui rejette la demande d'attachement ou la demande de mise à jour de localisation (210).

15. Système de traitement suivant une quelconque des revendications 8 à 14, le système de traitement étant construit et disposé de façon à obtenir d'un dit dispositif sans fil (10) qu'il transmette l'au moins un message de demande (210) en réponse à la détection d'une urgence.

16. Système de traitement suivant une quelconque des revendications 8 à 15, le système de traitement étant construit et disposé de façon à obtenir d'un dit dispositif sans fil (10) qu'il transmette l'au moins un message de demande (210) qui demande une mise à jour de localisation pour le dispositif sans fil (10) par un réseau d'accès radio terrestre de système de télécommunications mobiles universel, UTRAN, réseau sans fil, dans lequel une cause d'établissement pour la mise à jour de localisation est réglée à une valeur d'« appel d'urgence ».

17. Système de traitement suivant une quelconque des revendications 8 à 15, le système de traitement étant construit et disposé de façon à obtenir d'un dit dispositif sans fil (10) qu'il transmette au moins un message de demande (210) qui demande une mise à jour de localisation pour le dispositif sans fil (10) par un système mondial de communications mobiles à débits binaires améliorés pour les GSM de demain, GERAN, réseau sans fil, dans lequel une cause d'établissement pour la mise à jour de localisation est réglée à la valeur d' « appel d'urgence ».

18. Système de traitement suivant une quelconque des revendications 8 à 17, dans lequel le dispositif sans fil (10) est un dispositif ecall sans fil (10) et dans lequel le système de traitement est construit et disposé de façon à obtenir du dispositif ecall sans fil (10) qu'il transmette l'au moins un message de demande (210) pendant qu'il est en état ecall inactif, état, dans lequel il n'est pas enregistré dans un réseau sans fil et qu' il tente, ensuite, l'appel d'urgence (240) vers un réseau sans fil indépendamment de ce que le dispositif eCall sans fil (10) reçoit une réponse à la demande (210) ou non et indépendamment de ce que le dispositif eCall sans fil (10) est enregistré dans le réseau sans fil ou non.
